# NEUE EUROPÄISCHE PATENTSCHRIFT

(11) **EP 1 015 874 B2**
(45) Veröffentlichungstag und Bekanntmachung des Hinweises auf die Entscheidung über den Einspruch: **02.05.2007**
(45) Hinweis auf die Patenterteilung: 14.05.2003
(21) Anmeldenummer: 98937379.0
(22) Anmeldetag: 14.08.1998
(51) Int. Cl.: G01N 21/89, G06T 7/00

(54) **VERFAHREN ZUR AUSWERTUNG VON FEHLERN VON TEXTILEN FLÄCHENGEBILDEN**
PROCESS FOR EVALUATING DEFECTS OF TEXTILE FABRICS
PROCEDE PERMETTANT D'EXPLOITER DE DEFAUTS DES PRODUITS TEXTILES PLANS

(30) Priorität: 15.09.1997 CH 216797
(43) Veröffentlichungstag der Anmeldung: 05.07.2000
(73) Patentinhaber: Uster Technologies AG, 8610 Uster (CH)
(72) Erfinder: MEIER, Rudolf, CH-8192 Glattfelden (CH); UHLMANN, Jürg, CH-8500 Frauenfeld (US)
(74) Vertreter: Ellenberger, Maurice
(86) Internationale Anmeldenummer: PCT/CH1998/000343
(87) Internationale Veröffentlichungsnummer: WO 1999/014580

(56) Entgegenhaltungen:
- EP-A- 0 491 954
- DE-A- 3 639 636
- FR-A- 2 701 766
- GB-A- 2 253 697
- US-A- 5 544 256
- Nickolay,Schicktanz,Schmalfuss,"Automatisch e Warenschau" (Juni 1993), Seiten 31-39, 73-169 und 213 des Studienteils
- Nickolay, Schicktanz, Schmalfuss," Automatische Warenschau", Firmenartikel der ISRA Systemtechnik GmbH (Juni 1993)
- Ferd. v.d. Heijden," Image based measurement systems, Object recognition and parameter estimation", by John Wiley Sons Ltd., West Sussex PO19 1UD, England (1994) Seiten 131-135 und 147

## Beschreibung

Die Erfindung betrifft ein Verfahren zur Auswertung von Fehlern, die an textilen Flächengebilden ermittelt werden.

Bei der Herstellung von textilen Flächengebilden wie Geweben, Gewirken usw. treten immer wieder Fehler auf, die bewirken, dass die idealerweise regelmässige und streng strukturierte Oberfläche Unregelmässigkeiten oder Fehler aufweist. Solche Fehler können in der Ausdehnung sehr klein und unauffällig bis sehr gross oder aus anderen Gründen auffällig sein und den Wert und die Funktion, z.B. die Festigkeit oder das Aussehen des Flächengebildes mindern. Deshalb werden die fertigen Flächengebilde einer Prüfung unterzogen, die zum Ziel hat, Fehler in der Struktur anzuzeigen. Dies kann von Auge oder maschinell durchgeführt werden und geschieht oft sowohl vor dem Färben oder dem Veredeln als auch vor dem Konfektionieren. Insbesondere bei der maschinellen oder automatisierten Prüfung ist damit zu rechnen, dass die Menge der erkannten Fehler zunimmt, so dass ein entsprechend grosser Datenfluss entstehen kann.

Ein Nachteil ist dabei darin zu sehen, dass so zwar viele Daten verfügbar werden, dass diese aber geeignet sind Verwirrung zu stiften und nicht nur zur Verbesserung der Qualität der Produkte dienen können. Es ist weiter zu bedenken, dass es sehr viele Produzenten von textilen Flächengebilden jeder Art gibt und dass jeder Produzent und auch viele Abnehmer geneigt sind eigene Kriterien für die Qualität zu definieren und durchzusetzen. Das bedeutet, dass textile Flächengebilde, die durch verschiedene Personen oder Institutionen beurteilt werden zu Beurteilungen führen, die untereinander nur schlecht vergleichbar sind.

Der Studienteil des Buches "Automatische Warenschau" von B. Nickolay, K.-H. Schicktanz und H. Schmalfuss (Juni 1993) beschreibt ein Verfahren zur Fehlerdetektion an Textilien. Demgemäss werden vorgängig bestimmte Merkmale der Oberfläche ausgewählt, und aus diesen wird ein Merkmalsraum konstruiert. Für jedes Merkmal wird ein Streuparameter, d. h. eine gerade noch zulässige Abweichung vom Sollwert, festgelegt. Auf der Grundlage der Sollwerte und Streuparameter wird ein Parallelepiped im Merkmalsraum konstruiert. Dann wird die textile Oberfläche mit einem Sensor abgetastet. Die Merkmalswerte fehlerfreier Fragmente liegen vollständig im Inneren des Parallelepipeds, während Merkmalswerte ausserhalb des Parallelepipeds eine Fehlstelle bedeuten. Ferner beschreibt das Buch eine mögliche Art der Fehlerklassifizierung. Jedes Fehlerereignis wird als Punkt im Merkmalsraum aufgefasst. Gruppieren sich diese Punkte zu lokalen Wolken, so werden daraus Cluster gebildet. Die Cluster können separierbar sein oder nicht. Im ersteren Fall erhält man durch Trennung der Cluster Defektklassen.

Die Erfindung wie sie in den Patentansprüchen gekennzeichnet ist, löst deshalb die Aufgabe, ein Verfahren zu schaffen, mit dem Fehler, die in textilen Flächengebilden ermittelt werden, untereinander leicht verglichen und in ihrer Bedeutung differenziert beurteilt und ausgewertet werden können.

Dies wird durch das erfindungsgemässe Verfahren erreicht, wie es in Anspruch 1 definiert ist. Als Abschnitt kann man die gesamte vorliegende Fläche eines Flächengebildes oder einen Ausschnitt aus der Fläche verstehen. Ein solcher Ausschnitt kann nach einer Zeit, die für die Erfassung der Fehler notwendig ist, verschoben oder verändert werden, so dass periodisch neue Daten über andere Bereiche oder Abschnitte des Flächengebildes anfallen. Als Daten und somit auch als Parameter kommt beispielsweise die Intensität eines Bildpunktes oder Flächenelementes, eine Längenkoordinate, eine Breitenkoordinate usw. in Frage. Die gewonnenen Daten über die Fehler werden dann in Funktion ausgewählter Parameter in einem Bild dargestellt, wobei die Parameter wiederum in Bereiche unterteilt werden können, die für sich homogen gedacht sind. Sind zwei Parameter gewählt, so ist eine eindimensionale Darstellung die Folge. Sind drei Parameter gewählt ergibt sich als Bild eine zweidimensionale Darstellung. Das Bild stellt dann beispielsweise ein Klassierfeld dar, das aus einzelnen Feldern besteht, die eine Klasse definieren. Die Klasse ist durch die Ausdehnung des Feldes gekennzeichnet, das in einer Ebene liegt, die als Ort für Werte von zwei Parametern gilt. Ein weiterer Parameter kann durch im Feld eingetragene Symbole sichtbar gemacht werden.

Die durch die Erfindung erreichten Vorteile sind insbesondere darin zu sehen, dass damit eine strukturierte und standardisierte Beurteilung von Fehlern in textilen Flächengebilden ermöglicht wird. So können einerseits Werte vorbestimmter Parameter für die verschiedenartigsten Fehler aufgezeigt werden und andererseits können Kriterien angelegt werden, die helfen, die Bedeutung oder den Wert der Fehler zu erkennen und mit dem Wert anderer Fehler zu vergleichen. Auf diese Weise kann auch ein grosser Datenfluss über Fehler in den Flächengebilden verarbeitet und zu einer genauen Angabe über die vorkommenden Fehler verarbeitet werden.

Im folgenden wird die Erfindung anhand eines Beispiels und mit Bezug auf die beiliegenden Figuren näher erläutert. Es zeigen:
Figur 1 je einen Abschnitt der Fläche eines textilen Flächengebildes,
Figur 2 je einen Abschnitt gemäss Fig. 1 mit verschiedenen Fehlern und die
Figuren 3 bis 11 je ein Klassierfeld, wobei die Figuren 4 und 11 kein Klassierfeld gemäss der vorliegenden Erfindung zeigen, sondern nur der Illustration bestimmter Merkmale dienen.

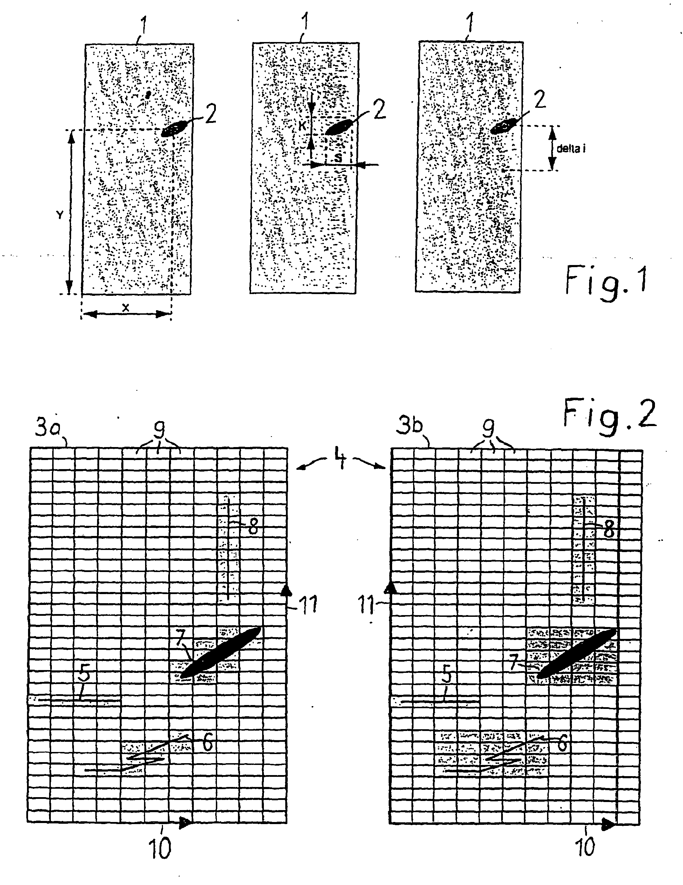

Fig. 1 zeigt dreimal dieselbe Bahn 1 eines textilen Flächengebildes mit einem Fehler 2. Zu diesem Fehler 2 lassen sich die Stellung oder Position beispielsweise über Koordinaten x und y, die Grösse über Werte der Ausdehnung in zwei Richtungen s und k, sowie die Intensität oder Abweichung beispielsweise der Farbe von der Umgebung über einen Wert delta i angeben.

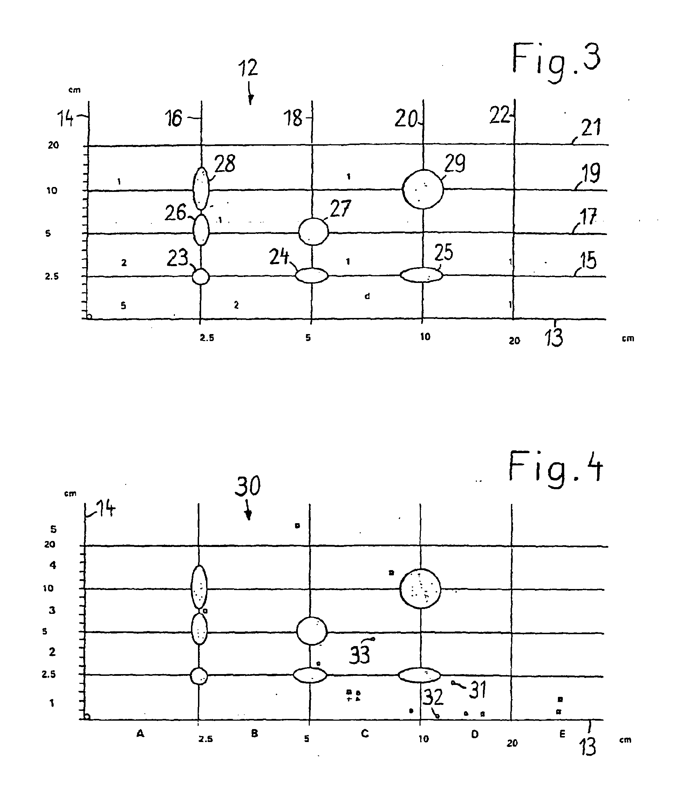

Fig. 2 zeigt je einen Abschnitt 3a, 3b eines textilen Flächengebildes mit einem Raster 4 und vier verschiedenen Fehlern 5, 6, 7 und 8. Die Fig. 3a zeigt dabei eine erste Möglichkeit, die Grösse der Fehler 5, 6, 7 und 8 zu bewerten und die Fig. 3b zeigt eine zweite Möglichkeit. Der Raster 4 teilt dazu die Abschnitte 3a, 3b in einzelne kleine Felder 9 auf, und die Belegung solcher Felder durch die Fehler 5 - 8 ist im Abschnitt 3a anders aufgefasst als im Abschnitt 3b, worauf später noch zurückzukommen ist. Es bedeutet aber in beiden Fällen, dass als Parameter, die Ausdehnung der Fehler durch die Anzahl belegter Felder gewählt ist. Obwohl sich die Fehler 5, 6, 7, 8 in zwei Richtungen, eine Schussrichtung 10 und eine Kettrichtung 11, falls es sich hier um ein Gewebe handelt, ausdehnen, geben die Werte der Parameter nur an, dass die Intensität der Fehler 5 - 8 einen Schwellwert überschreiten und eine der Anzahl belegter Felder 9 proportionale Ausdehnung haben. Die Abschnitte 3a, 3b bilden vorzugsweise mindestens ein Rechteck, dessen Seiten parallel und senkrecht zu Begrenzungen des Flächengebildes oder der Bahn 1 verlaufen.

Fig. 3 zeigt ein Bild 12 mit zwei Achsen 13 und 14 längs denen Werte von Parametern aufgetragen sind. Hier sind dies auf der Achse 13 Werte für die Länge eines Fehlers, beispielsweise bei einem Gewebe in Schussrichtung gesehen und auf der Achse 14 Werte für die Breite des Fehlers, beispielsweise bei einem Gewebe in Kettrichtung gesehen. Linien 15, 17, 19 und 21 teilen die Breite der Fehler in fünf Klassen auf, während Linien 16, 18, 20, 22 die Länge der Fehler in fünf Klassen aufteilen. Zusammen ergibt dies fünfundzwanzig Klassen für die Klassierung der Fehler nach deren Grösse, An mehreren Klassengrenzen, die durch die Linien 15 - 22 gegeben sind, sind Symbole 23 - 29 eingezeichnet, die die Form eines Fehlers darstellen, wie er durch Abmessungen entsprechend den genannten Linien zu erwarten ist. In den durch die Linien 15 bis 22 abgegrenzten Feldern sind weiter Zahlenwerte eingetragen, die die Anzahl der erfassten Fehler angeben, die in die betreffende Klasse fallen. Dafür ist eben die Annahme getroffen, dass eine Klasse einen homogen Bereich darstellt, d.h. es wird nicht mehr unterschieden, ob die Werte der Parameter nahe bei unteren oder oberen Klassengrenzen oder Linien 15 - 22 liegen oder nicht.

Fig. 4 stellt kein Klassierfeld gemäss der vorliegenden Erfindung dar. Sie zeigt ein Bild 30, mit Achsen und Linien, die Klassen begrenzen, wie es bereits aus der Fig. 3 bekannt ist. Die Achsen, Linien und Symbole sind deshalb mit denselben Bezugszeichen versehen. In den Feldern sind Punkte 31, 32, 33 usw. eingetragen, durch deren Lage zu den Achsen 13 und 14, die Grösse des Fehlers genau oder differenziert angegeben wird. Jeder Punkt entspricht deshalb einem Fehler und durch die Verteilung der Fehler bzw. deren Punkte ist auch ein Hinweis über die vorwiegende Art der Fehler im Flächengebilde gegeben. Zwischen den Linien 14 bis 22 sind längs der Achse 13 noch Buchstaben A bis E und zwischen den Linien 13 bis 21 sind längs der Achse 14 noch ganze Zahlen 1 bis 5 eingetragen. Damit kann jedes Feld und damit jede Klasse durch die Kombination einer Zahl und eines Buchstabens eindeutig bezeichnet werden.

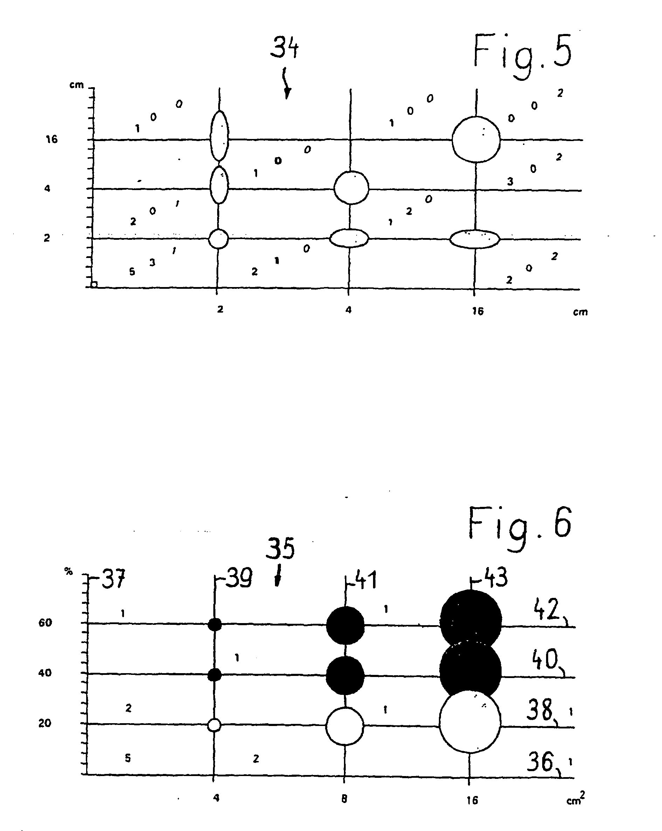

Fig. 5 zeigt ein Bild 34, mit Achsen und Linien, die Klassen begrenzen, wie es bereits aus der Fig. 3 bekannt ist. Die Achsen, Linien und Symbole sind deshalb mit denselben Bezugszeichen versehen. In den einzelnen Feldern, die Fehlerklassen entsprechen, sind diagonal aufsteigend Zahlenwerte vorgesehen, die die Intensität eines Fehlers angeben. Dabei gibt die Lage einer Ziffer die Intesität an und der Wert der Ziffer gibt die Anzahl Fehler mit dieser Intensität an. So geben Zahlenwerte die unten links im Feld stehen, hohe und Zahlenwerte die oben rechts stehen tiefe Intensitäten an.

Fig. 6 zeigt ein Bild 35 mit Achsen 36 und 37. Längs der Achse 36 sind Werte für die Fläche eines Fehlers, beispielsweise in cm² und längs der Achse 37 sind Werte für die Intensität eines Fehlers in Prozenten aufgetragen. Auch in diesem Bild 35 teilen Linien 38 bis 43 das Bild 35 in Felder oder Klassen auf. An den Kreuzungsstellen der Linien 38 - 43 sind Symbole eingezeichnet, die die Intensität des Fehlers durch die Stärke der Farbe angeben. Zahlenwerte in den Feldern geben die Anzahl aufgetretener Fehler der betreffenden Klasse an.

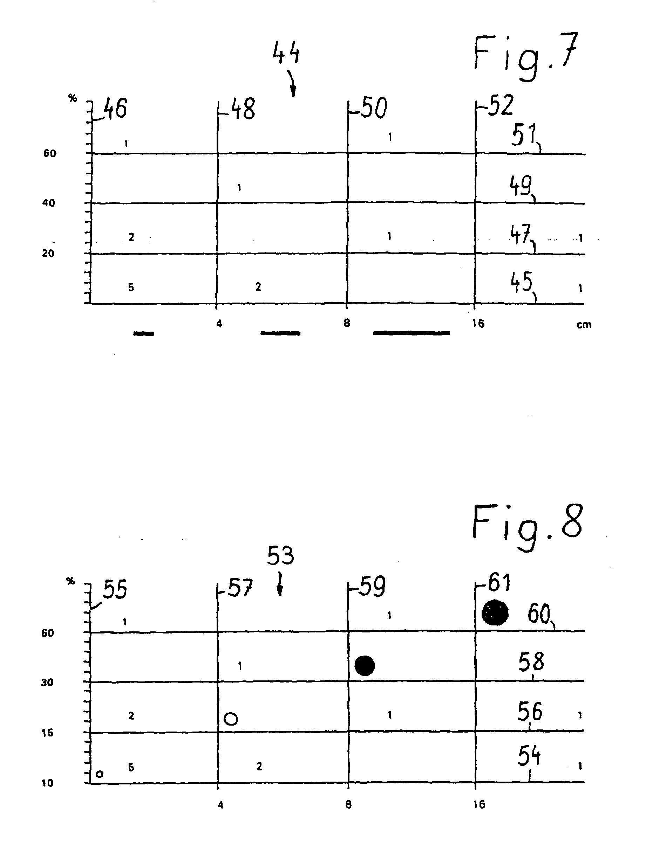

Fig. 7 zeigt ein Bild 44 mit Achsen 45 und 46. Längs der Achse 41 sind Werte für die Länge eines Fehlers, beispielsweise in cm und längs der Achse 46 sind Werte für die Intensität eines Fehlers beispielsweise in Prozenten aufgetragen. Auch in diesem Bild 44 teilen Linien 47 bis 52 das Bild in Felder oder Klassen auf. Die Anzahl erkannter Fehler wird durch die Ziffern in den Feldern, wie bereits aus der Fig. 3 bekannt, angezeigt.

Fig. 8 zeigt ein Bild 53 mit Achsen 54 und 55. Längs der Achse 54 sind Werte für die Anzahl belegter Felder 9 gemäss Fig. 2, und längs der Achse 55 sind Werte für die Intensität eines Fehlers aufgetragen. Auch in diesem Bild 53 teilen Linien 56 bis 61 das Bild in Felder oder Klassen auf. Die Anzahl erkannter Fehler wird durch die Ziffern in den Feldern, wie bereits aus der Fig. 3 bekannt, angezeigt.

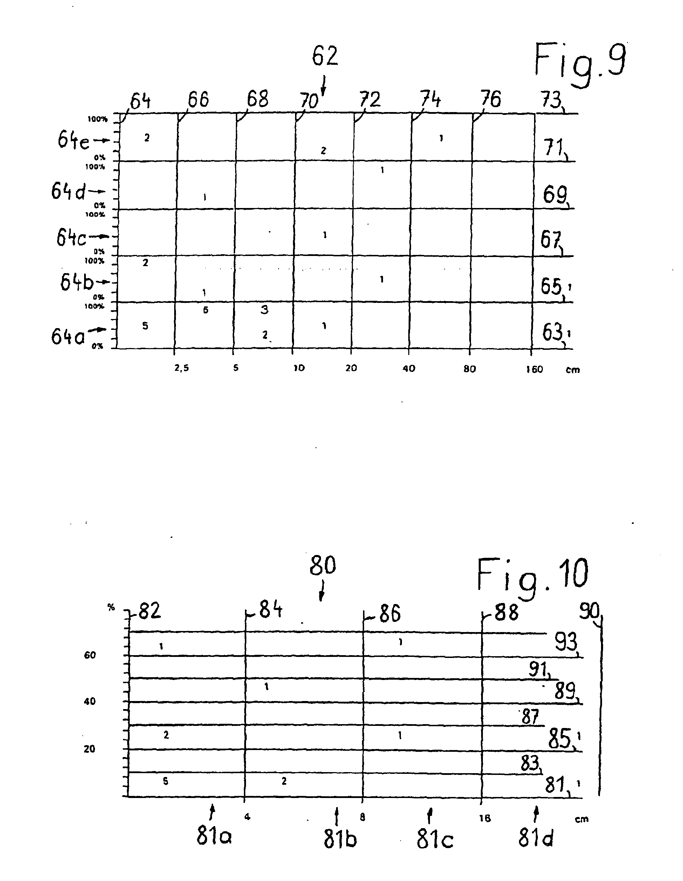

Fig. 9 zeigt ein Bild 62 mit Achsen 63 und 64. Längs der Achse 63 sind Werte für die Länge von Fehlern in cm aufgetragen. Die Achse 64 ist in mehrere Bereiche 64 a bis e aufgeteilt und in jedem Bereich sind Werte für die Intensität in Prozenten angegeben. Jeder der Bereiche 64a bis 64e betrifft eine bestimmte Fehlerart, beispielsweise der Bereich 64a betrifft Schussfehler, der Bereich 64b Kettfehler, der Bereich 64c Flächenfehler, der Bereich 64d Kantenfehler und der Bereich 64e betrifft Löcher. Linien 65 bis 78 teilen wiederum das Bild 62 in Felder oder Klassen auf, in denen Zahlenwerte die Anzahl erkannter Fehler in der betreffenden Klasse angeben. Die Lage des Zahlenwertes in bezug auf den Bereich auf der Achse 64 gibt die Intensität des Fehlers an. Es können so auch mehrere Zahlenwerte in einer Klasse auftreten. Das Bild 62 zeigt damit eine Klassierung die auf verschiedenen Fehlerarten basiert. Verschiedene bekannte Fehlerarten können beliebig zu Gruppen zusammengefasst sein. So sind hier beispielsweise unter dem Begriff "Schussfehler" allgemein Fehler verstanden, die sich vorwiegend in Schussrichtung in einem Gewebe ausbreiten. Solche Fehler sind unter folgenden Begriffen bekannt: Ansatzstelle, Anschlagstelle, Regulierstelle, Fachstelle, Band, Einschlag, Schlunze, Flug, Fadenbruch, Verlierer.

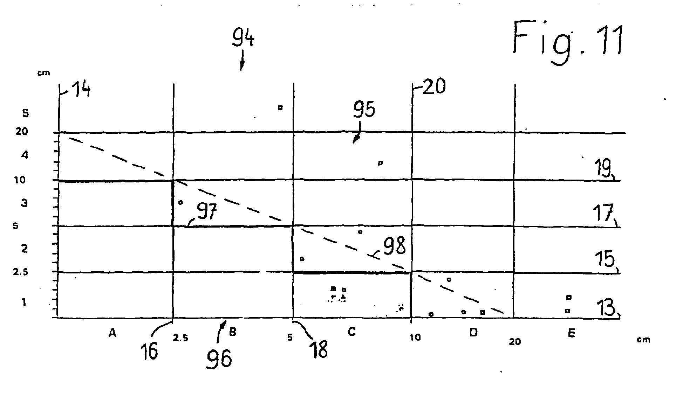

Fig. 10 zeigt ein Bild 80 mit einer Achse 81, die in Bereiche 81 a bis d aufgeteilt ist. Längs einer weiteren Achse 82 sind Werte für Intensitäten in Prozenten angegeben. Linien 83 bis 93 teilen das Bild 80 in Felder oder Klassen auf. In den Feldern oder Klassen können wiederum Werte für die Anzahl erkannter Fehler eingetragen werden. Beispielsweise können im Bereiche 81a die Intensität und von Schussfehlern, im Bereiche 81 b die Intensität von Kettfehlern, im Bereiche 81 c die Intensität oder Grösse von Löchern, im Bereiche 81d die Intensität von Kantenfehlern usw. und deren Anzahlen eingetragen werden

Fig. 11 stellt kein Klassierfeld gemäss der vorliegenden Erfindung dar. Sie zeigt ein Bild 94 mit Achsen und Linien wie sie bereits in der Bildern 12 und 30 (Fig. 3 und 4) vorhanden sind. Hier sind die Felder oder Klassen durch eine Grenze 97 in zwei Gruppen 95 und 96 aufgeteilt, wobei die Grenze längs Linien 15, 17, 19 und 16, 18, 20 verläuft. Es ist aber auch möglich, eine Grenze 98 zu definieren, die auch die einzelnen Felder oder Klassen aufteilt.

Das erfindungsgemässe Verfahren wird nun wie folgt durchgeführt:
Das textile Flächengebilde wird in an sich bekannter Weise beispielsweise durch eine Kamera abgetastet, wobei Bilder für Abschnitte der Oberfläche des Flächengebildes gemacht und daraus abgeleitete Signale verarbeitet werden. Durch Algorithmen für die Bildverarbeitung, die nicht Gegenstand dieser Erfindung sind, werden aus den abgeleiteten Signalen Fehler oder Besonderheiten in den Bildern der Oberfläche, durch Vergleich mit vorgegebenen Grenzwerten, Mustern usw. ermittelt. So entstehen Daten über Fehler in einem Abschnitt des Flächengebildes. Ein solcher Abschnitt ist beispielsweise in Fig. 1 gezeigt und als Bahn 1 bezeichnet. Darin ist ein Fehler 2 erkennbar, der sich durch verschiedene Parameter auszeichnet. Solche Parameter sind seine Lage, welche durch Koordinaten x und y gegeben ist, seine Grösse, welche durch die Werte s und k gegeben ist und seine Intensität, welche bewirkt, dass der Fehler überhaupt aus seiner Umgebung hervortritt, und welche durch eine qualitative Angabe, hier delta i genannt, quantifiziert wird.

Je nach dem, wie der Fehler später behandelt wird, sind unterschiedliche Parameter von Bedeutung. Soll beispielsweise jeder Fehler entfernt werden, so interessiert nur seine Lage, eventuell noch seine Grösse. Soll das Flächengebilde danach beurteilt werden, wo die Fehler am häufigsten sind, wie beispielsweise am Rand, so interessiert auch nur die Lage. Dann werden die Daten nach Parametern wie Länge und Breite sortiert und entsprechend in einem Bild dargestellt.

Soll beurteilt werden können, wie sich der Fehler für das Auge darstellt oder wie er eine nachfolgende Verarbeitung des Flächengebildes, wie Färbung oder Veredelung beeinflusst, so interessiert seine Grösse und eventuell seine Intensität. Dann sind die Parameter, nach denen die Daten sortiert werden, die Länge s und die Breite k des Fehlers, sowie seine Intensität delta i.

Zum Erfassen der Grösse eines Fehlers kann aus den aus der Bildverarbeitung gewonnenen Signalen einfach eine Dimension ermittelt werden, oder es kann ein Bewertung vorgenommen werden, wie sie aus der Fig. 2 hervorgeht. In diesem Falle wird untersucht, wieviele Felder 9 ein Fehler berührt oder mindestens teilweise bedeckt. Diese Felder, wie sie im Abschnitt 3a markiert sind, werden für jeden Fehler gezählt und die Zahl wird beispielsweise längs der Achse 54 in Fig. 8 aufgetragen. Es ist aber auch, wie für den Abschnitt 3b gezeigt möglich, zu jedem Fehler die belegten Felder 9 zu nehmen und diese soweit zu ergänzen, dass sie zusammen ein Rechteck bilden, das den Fehler umschliesst. Dann sind die Felder 9 zu zählen und aufzutragen, die in diesem Rechteck enthalten sind.

Zum Erfassen der Intensität eines Fehlers, geht man von der Farbe oder Helligkeit der Umgebung des Fehlers aus und versucht Abweichungen der Farbe oder Helligkeit mehr oder weniger genau oder abgestuft zu quantifizieren was mit einem Wert delta i ausgedrückt wird. Wie weit dies gelingt, hängt von den verwendeten Einrichtungen zur Bildverarbeitung ab.

Zur Darstellung der Grösse des Fehlers in einem Bild kann im Abschnitt seine Länge in an sich bekannter Weise erfasst und in einem Bild 12, 30 durch einen Wert auf der Achse 13 dargestellt werden. Ebenso kann die Breite des Fehlers durch einen Wert auf der Achse 14 dargestellt werden. Zusammen ergibt sich durch diese beiden Werte beispielsweise ein Punkt 33 (Fig. 4). Nun kann dieser als Punkt stehengelassen oder einfach als ein Fehler in der Klasse C2 behandelt werden, was bedeuten würde, dass dann für diese Klasse lediglich ein Zählwert um Eins erhöht würde. Dazu ist es möglich, vorausgehend gewisse Felder oder Klassen als zulässig und andere als unzulässig vorzugeben. Dann wird durch die Lage des Fehlers im Bild 13, 30 sofort klar, wie der Fehler zu bewerten ist. Häufen sich Werte für Fehler in einzelnen Klassen, so ergibt dies ebenso einen Hinweis zur Beurteilung des Flächengebildes.

Zur Darstellung der Intensität eines Fehlers bestehen die Möglichkeiten, wie sie anhand der Bilder 34, 35, 44 und 53 (Fig. 5 - 8) bereits dargestellt wurden.

Wie in Fig. 1 gezeigt, eignen sich Abschnitte der Fläche, aus denen die Daten gewonnen werden, die ein Rechteck bilden besonders gut, denn die betreffenden Flächengebilde liegen, was durch deren Herstellung bedingt ist, bereits auch als Rechtecke vor. Dann sollten Seiten der Abschnitte auch parallel und senkrecht zu den Begrenzungen des Flächengebildes liegen. Allerdings ist es üblich, dass der betreffende Abschnitt nicht die ganze Fläche des Flächengebildes ausmacht. Dies trifft für Abschnitte 3a, 3b gemäss Fig. 2 zu, die einen Teil der Bahn 1 gemäss Fig. 1 vergrössert zeigen.

Als Parameter kann auch direkt die Form eines Fehlers betrachtet werden, wie sie durch die Symbole 23 bis 29 in Fig. 3 dargestellt ist. Allerdings ist ein solcher Parameter letztlich aus zwei Parametern (Länge und Breite) zusammengesetzt. Aber man könnte den Parameter "Form" mit dem Parameter "Intensität" wie er aus der Fig. 6 bekannt ist kombinieren und so eine weitere Kombination und damit eine weitere Bilddarstellung gewinnen. Damit wird klar, dass hier nur einige Möglichkeiten aufgezeigt sind, die aber gemäss der Erfindung durch Kombination, beispielsweise durch Vertauschung der Achsen, noch in naheliegender Weise weiterentwickelt werden können.

Die Auswertung von Daten und wahlweise auch die Verarbeitung des textilen Flächengebildes kann differenziert erfolgen, je nach dem ob die ermittelten Daten Gruppen 95 oder 96 (Fig. 11) zugehören, die durch eine Grenze 97, 98 getrennt sind. Beispielsweise kann die Gewichtung der Fehler in der Gruppe 96 gegenüber den Fehlern in der Gruppe 95 reduziert sein. Oder Fehler der Gruppe 96 werden lediglich, beispielsweise am Rand einer Gewebebahn markiert, während Fehler der Gruppe 95 entfernt werden, beispielsweise indem das Gewebe in deren Umgebung aufgetrennt wird. Ganz allgemein können durch Grenzen 97, 98 usw. Gruppen von Klassen oder Kategorien von Fehlern gebildet werden, die unterschiedliche Aktionen auslösen.

## Patentansprüche

1. Verfahren zur Auswertung von Fehlern, die an textilen Flächengebilden (1) ermittelt werden, wobei die Fehler an einem Abschnitt (3a, 3b) der Fläche des Flächengebildes (1) durch Bildverarbeitung ermittelt, nach mindestens zwei Parametern (13, 14) sortiert und in Funktion der Parameter (13, 14) in einem Bild (12, 30) dargestellt werden, **dadurch gekennzeichnet, dass** das Bild aus rechteckigen Feldern besteht, die durch Linien (15-22) abgegrenzt werden, jedem Feld eine Klasse für die Fehler zugeordnet wird und den Klassen Werte für die erkannte Anzahl von Fehlern im Flächengebilde zugeordnet werden.

2. Verfahren nach Anspruch 1, **dadurch gekennzeichnet, dass** der Abschnitt in dem Fehler erfasst werden ein Rechteck bildet, dessen Seiten parallel und senkrecht zu Begrenzungen des Flächengebildes verlaufen.

3. Verfahren nach Anspruch 1, **dadurch gekennzeichnet, dass** als Parameter die Ausdehnung eines erkannten Fehlers in zwei Richtungen (s, k) einer Fläche im Flächengebilde vorgesehen werden.

4. Verfahren nach Anspruch 1, **dadurch gekennzeichnet, dass** als weiterer Parameter die Intensität (delta i) eines Fehlers vorgesehen wird.

5. Verfahren nach Anspruch 1, **dadurch gekennzeichnet, dass** als weiterer Parameter die Form (23-29) eines Fehlers dargestellt wird.

6. Verfahren nach Anspruch 1, **dadurch gekennzeichnet, dass** die Klassen durch Grenzen (97, 98) in Gruppen aufgeteilt werden.

## Claims

1. Method for evaluating faults determined on textile fabrics (1), wherein the faults are determined on a section (3a, 3b) of the surface of the fabric by means of image processing, sorted according to at least two parameters (13, 14) and represented in an image (12, 30) as a function of the parameters (13, 14), **characterized in that** the image consists of rectangular fields which are delimited by lines (15-22), a class for faults is associated with each field, and values for a detected number of faults in the fabric are associated with the classes.

2. Method according to claim 1, **characterized in that** the section in which faults are detected forms a rectangle whose sides extend parallel and perpendicularly to boundaries of the fabric.

3. Method according to claim 1, **characterized in that** the extent of a detected fault in two directions (s, k) of a surface in the fabric is provided as a parameter.

4. Method according to claim 1, **characterized in that** the intensity (delta i) of a fault is provided as a further parameter.

5. Method according to claim 1, **characterized in that** the form (23-29) of a fault is represented as a further parameter.

6. Method according to claim 1, **characterized in that** the classes are divided into groups by boundaries (97, 98).

## Revendications

1. Procédé d'analyse des défauts qui sont détectés sur des produits textiles plats (1), les défauts étant détectés dans une zone (3a, 3b) de la surface du produit textile plat par traitement d'images, triés selon au moins deux paramètres (13, 14) et représentés en fonction des paramètres sur une image (12, 30), **caractérisé en ce que** l'image est formée par des cellules rectangulaires qui sont délimitées par des lignes (15-22), à chaque cellule est associée une classe pour les défauts, et des valeurs pour un nombre de défauts détecté dans le produit textile plat sont affectées aux classes.

2. Procédé selon la revendication 1, **caractérisé en ce que** la zone dans laquelle sont détectés des défauts forme un rectangle, dont les côtés sont parallèles et perpendiculaires aux délimitations du produit textile plat.

3. Procédé selon la revendication 1, **caractérisé en ce que** l'extension d'un défaut détecté dans deux directions (s, k) d'une surface dans le produit textile plat représente un paramètre.

4. Procédé selon la revendication 1, **caractérisé en ce que** l'intensité (delta i) d'un défaut représente un autre paramètre.

5. Procédé selon la revendication 1, **caractérisé en ce que** la forme (23-29) d'un défaut est représentée comme un autre paramètre.

6. Procédé selon la revendication 1, **caractérisé en ce que** les classes sont divisées en groupes par des limites (97, 98).
